# EUROPEAN PATENT SPECIFICATION

(11) **EP 1 418 780 B1**
(45) Date of publication and mention of the grant of the patent: **16.08.2006**
(21) Application number: 02257634.2
(22) Date of filing: 05.11.2002
(51) Int. Cl.: H04Q 7/38

(54) **Method and telecommunications controller for providing measurement reporting criteria to a mobile user terminal**
Verfahren und Telekommunikationssteuerung zur Bereitstellung von Messberichtkriterien an eine Mobilstation
Methode et contrôleur de télécommunications pour fournir à un terminal mobile des critères de relevés de mesures

(43) Date of publication of application: 12.05.2004
(73) Proprietor: LUCENT TECHNOLOGIES INC., Murray Hill, New Jersey 07974-0636 (US)
(72) Inventor: Qiang Cao, Swindon, Wiltshire SN2 3XL (GB); Sapiano, Philip, Corsham, Wiltshire SN13 9AY (GB); Charriere, Patrick, Tetbury, Gloucestershire GL8 8DR (GB); Lim, Seau Lim, Swindon, Wiltshire SN1 1HF (GB)
(74) Representative: Sarup, David Alexander

(56) References cited:
- WO-A-02/30146
- WO-A-99/43178

## Description

### Technical Field

The present invention relates to a method of providing to a mobile user terminal a set of measurement reporting criteria to be applied by the mobile user terminal in respect of a predetermined cell of a radio telecommunications network.

The present invention also relates to a radio telecommunications network comprising a plurality of cells and a controller, and operative to provide to a mobile user terminal in respect of a predetermined cell a set of measurement reporting criteria to be applied for that cell.

The present invention also relates to a radio telecommunications controller operative to provide for a mobile user terminal in respect of a predetermined cell of a telecommunications network a set of measurement reporting criteria to be applied for that cell.

### Background of the Invention

In a code division multiple access (CDMA) system for mobile telecommunications such as a Universal Mobile Telecommunications System (UMTS), a mobile user terminal may be in a region in which soft-handover (also known as soft-handoff) is possible. In a soft-handover scenario, the signal from a mobile user terminal can be received by more than one cell of a network.

For soft-handover to work, one important aspect is to have measurement reporting by the mobile user terminal (sometimes referred to as user equipment, UE) of e.g. the strength of signals received from cells above a predetermined threshold. The measurement reporting from the mobile user terminal is controlled by the UMTS terrestrial radio access network (UTRAN) by way of sending reporting criteria to the mobile user terminal. Each base station have different reporting criteria (i.e reporting criteria may differ on a per cell basis). It is necessary that the correct reporting criteria are used to give up-to-date measurement reporting. The reporting criteria normally consists of event-triggered conditions.

For inter-frequency handover (i.e. from one set of frequency bands to another) and inter-radio access technology handover (i.e from one radio access technology to another, often referred to as inter-RAT handover, e.g. from a UTRAN network to a General Packet Radio Service (GPRS)network), measurement reporting criteria are also needed by the mobile user terminal in order to make a measurement report to the UTRAN network.

To authors' knowledge, the known approach is that the serving radio network controller (RNC) controlling communications with the mobile user terminal has to know the reporting criteria of every cell it controls as well as neighbouring cells controlled by the drift radio network controller. In object oriented design of a radio network controller (RNC), the reporting criteria is stored in each cell server within the radio network controller (RNC).

There are several problems with the known approach as follows. Firstly, any change in the reporting criteria in a cell as a result of a change in a neighbouring cell associated with another radio network controller (the drift radio network controller) requires communication from the drift radio network controller to the serving radio network controller via an operations and maintenance centre (OMC-U). This is a tedious manual update procedure, and is prone to human error. The task is even more complicated if the serving radio network controller and drift radio network controller are under the control of with different vendors. There is no standard interoperability when a serving radio network controller is controlled by an operations and maintenance centre of one vendor and another by an operations and maintenance centre of another vendor.

Secondly, it is likely that the reporting criteria are the same for most cells in a network. The reporting criteria only needs to be customised for each cell in certain relative small areas (e.g. densely urban areas).

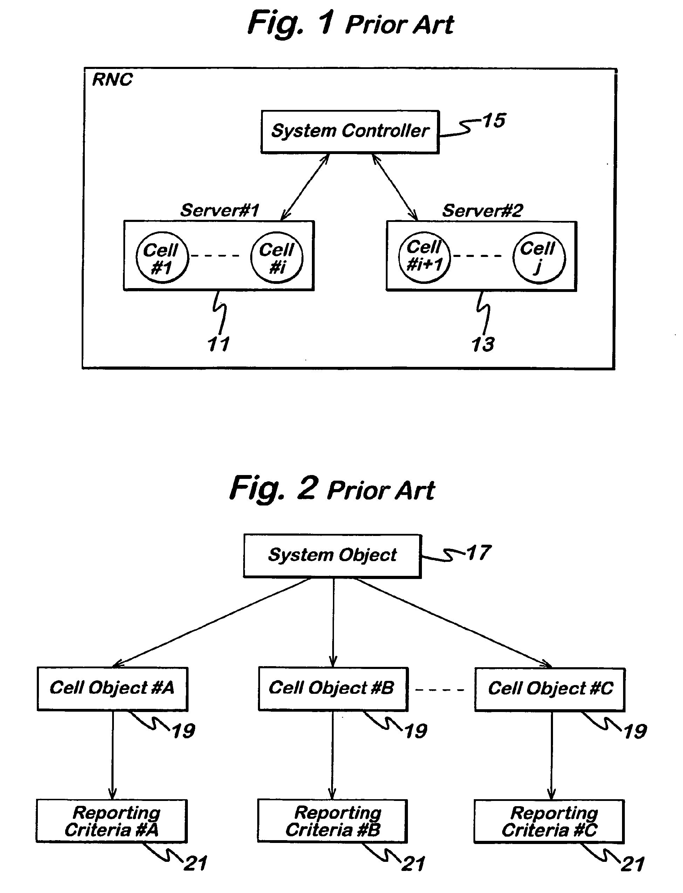

Thirdly, as shown in Figure 1 the reporting criteria of different cells controlled by a radio network controller (RNC) are stored in different servers, (server # 1 (denoted 11 in Figure 1 stores the data for cell number 1 to cell number I, and server #2 stores the data for cell number i+1 to cell number j) within the radio network controller. In order to retrieve the reporting criteria for a cell, an internal query mechanism needs to be set up and the information is obtained (by a system controller 15), using this mechanism, from one of the servers or another 11,13. In the worst case scenario, there will thus be a lot of internal traffic if the reporting criteria are stored in different servers and this will thus reduce the radio network controller performance.

Fourthly, using an object-orientated query mechanism within the radio network controller (RNC), as shown in Figure 2 each call for reporting criteria of a cell requires a system object 17 to query the appropriate cell object 19 which itself queries an associated set of reporting criteria 21 for that cell. Accordingly, a large amount of memory is required in the radio network controller to store the reporting criteria information for each cell.

It is known from International (P.C.T) Patent Publication WO 99/43178 to provide a method of providing to a mobile user terminal a set of measurement reporting criteria to be applied by the mobile user terminal in respect of a predetermined cell of a radio telecommunications network, the network comprising a plurality of cells and a controller, the method comprising the controller selecting the criteria from stored criteria.

### Summary of the Invention

The present invention is characterised over the disclosure of WO 99/43178 in that by the controller selecting from stored sets of criteria one of the stored sets of criteria for use, one stored set of criteria being a default set for cells under the control of the controller, the default set being applicable to some or all the cells controlled by the controller, and another of the stored sets of criteria being a cell-specific set of criteria for a particular cell, the cell-specific set taking precedence over the default set for the particular cell.

The present invention provides a method of providing to a mobile user terminal a set of measurement reporting criteria to be applied by the mobile user terminal in respect of a predetermined cell of a radio telecommunications network, the network comprising a plurality of cells and a controller, the method comprising the controller selecting the set of criteria from stored sets of criteria, one set of which is a default set for cells under the control of the controller, and another set of which is a cell-specific set of criteria.

Preferably the network is a Universal Mobile Telecommunications System (UMTS) network, the controller being a Radio Network Controller (RNC) controlling a plurality of base stations each of which has at least one associated cell.

Preferably reporting criteria are obtained by, within the controller, a system object being directed to a cell object, each cell object having a pointer to the stored set of reporting criteria for that cell, at least two cell objects pointing to the same set of reporting criteria. Alternatively preferably reporting criteria are obtained by, within the controller, a system object being directed to the default set of reporting criteria upon determination that the cell object for the cell has no pointer to another stored set of reporting criteria.

Preferably the stored sets of criteria further comprise a set of criteria applicable to a subset of the cells controlled by the controller, the subset comprising at least two cells.

Preferably the network comprises a further controller controlling further cells, the further controller being operative to provide to the controller the set of reporting criteria applicable to one of the further cells in response to a request from the controller. Preferably the request is a call set up request.

In preferred embodiments, for a cell controlled by the serving radio network controller, the measurement reporting criteria information may be on cell level (i.e different for different cells) or at a higher level applicable to some or all the cells controlled by a radio network controller. Two level or multi-level measurement reporting criteria are thus provided. The number of reporting criteria objects, and hence the amount of queries between objects, required in the radio network controller is reduced . In consequence, the performance of the radio network controller is enhanced.

Preferred embodiments have several advantages. A need to perform manual input by the operator of measurement reporting criteria for each cell is overcome. The number of objects required to store the measurement reporting criteria is reduced. The amount of inter-server traffic within a radio network controller in looking up reporting criteria for cells is reduced and thus radio network controller performance is improved. Furthermore, the amount of duplicated information in a database in the radio network controller is reduced.

In preferred embodiments, improvements are thus provided in the provision of measurement reporting criteria at a radio network controller for use by a mobile user terminal for soft-, inter-frequency, or inter-radio access technology handovers. Radio network controller performance is increased in dealing with soft-handover, inter-frequency handover and inter-radio access technology handover situations.

In some preferred embodiments, a cell controlled by a radio network controller other than the serving radio network controller will provide the measurement reporting criteria information when a radio connection is established to the cell in the soft-handover case. Communication is provided of the measurement reporting criteria from neighbouring radio network controller (RNC) while setting up radio connections. This will ensure that the serving radio network controller does not have to contain all the measurement reporting criteria information of cells belonging to other radio network controllers (RNC) obtained via the operations and maintenance centre (OMC-U). There is thus improved inter-operability between radio network controllers (RNCs) from different vendors. Use of explicit signalling is possible for the serving radio network controller to request measurement reporting criteria from the radio network controller which controls the cell or contains the cell information, particularly in the case of inter-RAT and inter-frequency handovers.

The present invention also provides a radio telecommunications controller operative to provide for a mobile user terminal in respect of a predetermined cell of a telecommunications network a set of measurement reporting criteria to be applied for that cell, the controller comprising storage means operative to store measurement reporting criteria, characterised in that the storage means is operative to store sets of measurement reporting criteria one set of stored set of criteria being a default set for cells under the control of the controller, the default set being applicable to some or all the cells controlled by the controller, and another set of the stored sets of criteria being a cell-specific set of criteria, and selection means operative to select from the stored sets of criteria, one of the stored sets of criteria for application to a particular cell, the cell-specific set taking precedence over the default set for the particular cell

Preferably the controller being a Universal Mobile Telecommunications System (UMTS) Radio Network Controller (RNC) controlling a plurality of base stations each of which has at least one associated cell.

Preferably reporting criteria are obtained by, within the controller, a system object being directed to a cell object, each cell object having a pointer to the stored set of reporting criteria for that cell. Alternatively preferably reporting criteria are obtained by, within the controller, a system object being directed to the default set of reporting criteria upon determination that the cell object for the cell has no pointer to a stored set of reporting criteria.

Preferably the stored sets of criteria further comprise a set of criteria applicable to a subset of the cells controlled by the controller, the subset comprising at least two cells.

A embodiment of the present invention also provides a radio telecommunications network comprising a plurality of cells and a controller, and operative to provide to a mobile user terminal in respect of a predetermined cell a set of measurement reporting criteria to be applied for that cell, the controller comprising storage means operative to store measurement reporting criteria, characterised in that the storage means is operative to store sets of measurement reporting criteria one set of stored set of criteria being a default set for cells under the control of the controller, the default set being applicable to some or all the cells controlled by the controller, and another set of the stored sets of criteria being a cell-specific set of criteria, and selection means operative to select for a particular cell, the cell-specific set taking precedence over the default set for the particular cell

Preferably the network being a Universal Mobile Telecommunications System (UMTS) network, the controller being a Radio Network Controller (RNC) controlling a plurality of base stations each of which has at least one associated cell.

Preferably reporting criteria are obtained by, within the controller, a system object being directed to a cell object, each cell object having a pointer to the stored set of reporting criteria for that cell, each cell object having a pointer to the stored set of reporting criteria for that cell, at least two cell objects pointing to the same set of reporting criteria. Alternatively preferably reporting criteria are obtained by, within the controller, a system object being directed to the default set of reporting criteria upon determination that the cell object for the cell has no pointer to a stored set of reporting criteria.

Preferably the stored sets of criteria further comprise a set of criteria applicable to a subset of the cells controlled by the controller, the subset comprising at least two cells.

Preferably the network comprises a further controller controlling further cells, the further controller being operative to provide to the controller the set of reporting criteria applicable to one of the further cells in response to a request from the controller. Preferably the request is a call set up request.

### Brief Description of the Drawings

A preferred embodiment of the present invention will now be described by way of example and with reference to the drawings, in which:
Figure 1 is a diagram illustrating how reporting criteria of a cell are obtained by its controlling radio network controller (prior art),
Figure 2 is a diagram illustrating objects used by a radio network controller in determining reporting criteria of cells that it controls (prior art),
Figure 3 is a diagram illustrating a Universal Mobile Telecommunications System (UMTS) terrestrial radio access network (UTRAN),
Figure 4 is a diagram illustrating regions of coverage by the network,
Figure 5 is a diagram illustrating some objects used by a radio network controller in determining reporting criteria of cells that it controls,
Figure 6 is a diagram illustrating one option for configuring the objects shown in Figure 5 so as to determine the reporting criteria of the cells,
Figure 7 is a diagram illustrating another option for configuring the objects shown in Figure 5 so as to determine the reporting criteria of the cells,
Figure 8 is a diagram illustrating how reporting criteria usable in respect by one or some cells can be obtained, and
Figure 9 is a diagram illustrating how reporting criteria are obtained for a cell under the control of another radio network controller.

### Detailed Description

The preferred network is a code division multiple access (CDMA) system for mobile telecommunications, in particular a Universal Mobile Telecommunications System (UMTS) terrestrial access network (UTRAN). When a mobile user terminal is in a region in which soft-handover is possible, the signal from a mobile user terminal can be received by more than one cell of the network. Combining the signals from different cells provides soft-handover gain (i.e. the benefit of being able to select the strongest signal in the uplink (i.e in the direction from a mobile to the base station).

For soft-handover to work, one important aspect is to have measurement reporting from the mobile user terminal (sometimes referred to as user equipment, UE). The measurement reporting from the mobile user terminal is controlled by the network by way of sending reporting criteria to the mobile user terminal. Reporting criteria of a cell are obtained by its controlling radio network controller for transmission to and use by a mobile user terminal. Different reporting criteria can be applied in each cell (i.e reporting criteria may differ on a per cell basis). It is necessary that the correct reporting criteria are used to give up-to-date measurement reporting. The reporting criteria normally consists of event-triggered conditions. (Examples of event-triggered condition can be found in for example Third Generation Partnership Project (3GPP) Technical Specification 25.331 Section 14.1.2). The reporting criteria includes, for example, whether the signal strength from the cell is above a first threshold whereby the cell is to be included in the active set of cells having a radio connection to a mobile user terminal; or is below a second threshold whereby the cell is removed from the active set by taking down the radio connection. Another measurement criterion depends on hysteresis (i.e. the time for which the criteria must be met before that is reported).

For inter-frequency handover (i.e. from one set of frequency bands to another) and inter-radio access technology handover (i.e from one radio access technology to another, e.g. from a UTRAN network to a General Packet Radio Service (GPRS)network), measurement reporting criteria are also needed by the mobile user terminal in order to make a measurement report to the UTRAN network.

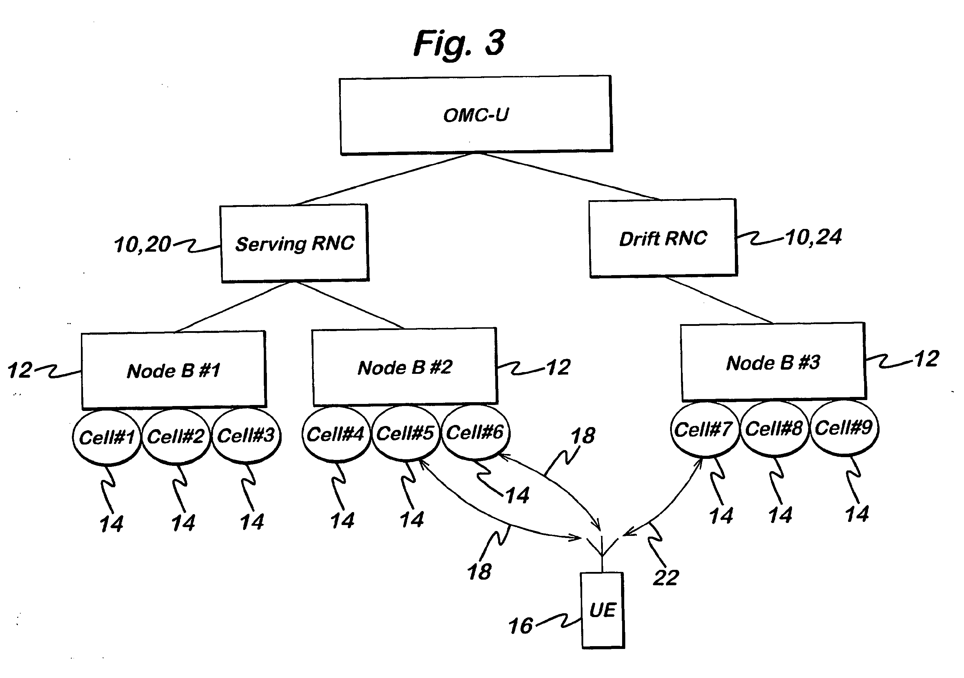

The architecture of the UTRAN network is basically as shown in Figure 3. In the Figure only two radio network controllers 10, three base stations 12 , nine cells 14 and one mobile user terminal 16 are shown for simplicity. Each base station 12 (Node B in UMTS terminology) of the network typically has three radio coverage areas (i.e. cells, also known as sectors) as the base station has three directional antennas angled at 120 degrees to each other. Radio network controllers (RNC) each control several base stations and hence a number of cells.

Figure 3 shows three radio connections in a soft-handover scenario. Two of the radio connections 18 are to cells (cell 5 and cell 6 in Figure 3) controlled via a base station (Node B) by a serving radio network controller (SRNC) 20 and the other radio connection 22 is to a cell (cell 7) controlled (via another base station) by another radio network controller, known as a drift radio network controller (DRNC) 24. The mobile user terminal 16 is provided with the reporting criteria for one of Cell 5, 6 or 7 shown in Figure 1 dependent on which of those cells gives the strongest signal.

As shown in Figure 3, each radio network controller (RNC) 10, regardless of whether a serving radio network controller (SRNC) 20 or drift radio network controller (DRNC) 24, controls an associated set of cells 14 via base stations 12. Each radio network controller (RNC) 10 stores information, including the reporting criteria of the cells 14 that it controls. Within a radio network controller (RNC) 10 it is not necessary to store reporting criteria and possible other information of each cell as those criteria are likely to be the same.

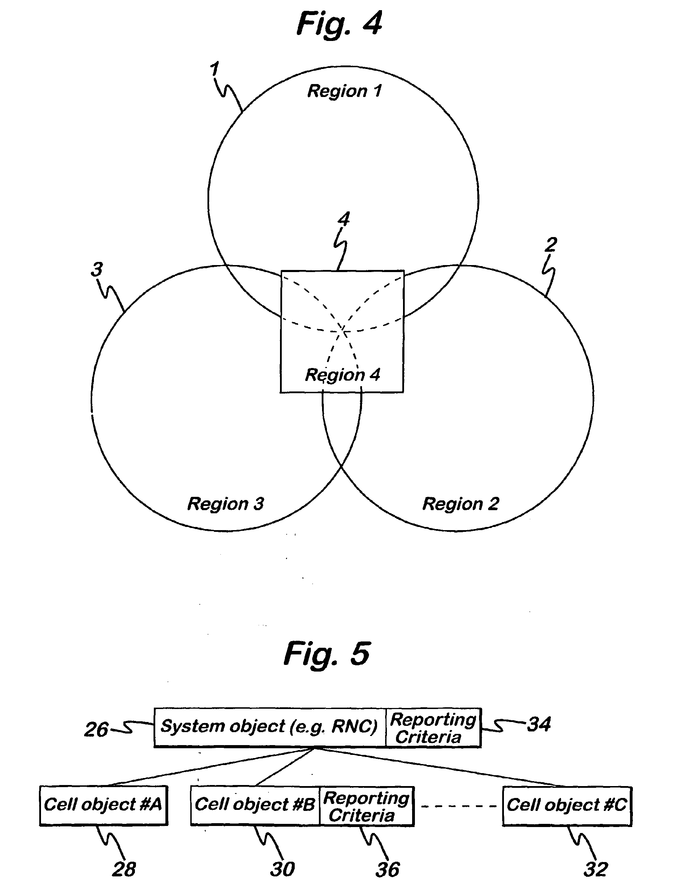

Turning now to Figure 4, each of geographical regions 1,2,3, and 4 contain a set of cells (not shown in the Figure) controlled by a respective single radio network controller (not shown in the Figure). For region 1, as the radio propagation environment is uniform across that region, the cells within that region have the same (i.e common) reporting criteria. Similarly for region 2, as the channel environment is uniform across that region, the cells within that region have the same reporting criteria. Similarly for region 3, as the radio propagation environment is uniform across that region, the cells within that region have the same reporting criteria. However for region 4, the radio propagation environment varies (due to the terrain being mountainous for example. Thus each of the cells within region 4 requires different reporting criteria.

### Heirarchical Measurement reporting criteria

As generally most of the cells have the same measurement reporting criteria, it is wise to have the measurement reporting criteria on two-levels: one being on cell level (i.e different for different cells) and the other being at a higher level. The higher level criteria can apply to a subset of the cells controlled by a radio network controller (RNC), all of the cells controlled by a radio network controller (RNC), or even the cells controlled by more than one radio network controller (RNC). The lower level (i.e. the cell level) is more tailored for a particular cell so when cell-specific measurement criteria exist, these take precedence. An illustration is provided in Figure 5.

Figure 5 illustrates an object-orientated query mechanism which occurs within the radio network controller (RNC) to determine the reporting criteria for a cell controlled by the radio network controller. The system object 26 requesting the information makes a reference to (in other words has a pointer to) another object, namely a cell object for the cell under consideration (be that cell object A 28, cell object B 30, or cell object C 32. As is well known in the field of object-orientated design, an object is a database plus some computational intelligence with which to process data. In Figure 5, cell object A and cell object C use the reporting criteria 34 which are kept as default in the system object 26 while cell object B uses its own cell-specific reporting criteria 36which is part of cell object B.

The basic approach shown in Figure 5 can be implemented in different ways as described immediately below.

### First Option

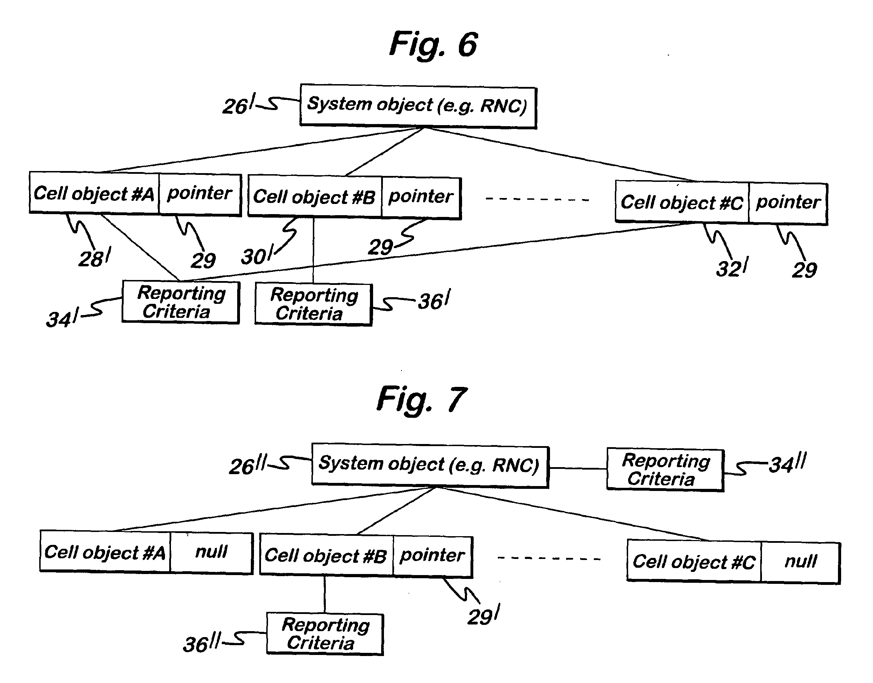

As shown in Figure 6, within a radio network controller (RNC), the set of reporting criteria is obtained for the system object using pointers 29 from cell objects. When reporting criteria 34' for cell object A or cell object C is required by the system object 26', the system object 26' asks cell object A (28')or cell object C (32') for the reporting criteria 34' to be applied. Hence the number of objects for reporting criteria is small but the large number of queries from the system object remains.

(Incidentally as shown in the Figure 6, when reporting criteria 36' for cell object B is required, the system object 26' asks cell object B (30') for the reporting criteria 34' to be applied. Cell object B (30') has a pointer to the reporting criteria 36')

### Second Option

As shown in Figure 7, reporting criteria for the system object 26"is obtained using a pointer from the system object itself directly to the reporting criteria 34' for cell A or cell C. Incidentally as shown in the Figure 7, when reporting criteria 36" for cell object B is required, the system object 26" asks cell object B (30") for the reporting criteria 34" to be applied. Cell object B (30") has a pointer 29' to the reporting criteria 36"

This second option reduces both the number of objects as well as the number of inter-object queries whereas the first option only reduces the number of objects (compared to the prior art approach illustrated in Figure 2 in which each cell has its associated reporting criteria stored in the radio network controller).

### Extension to other levels

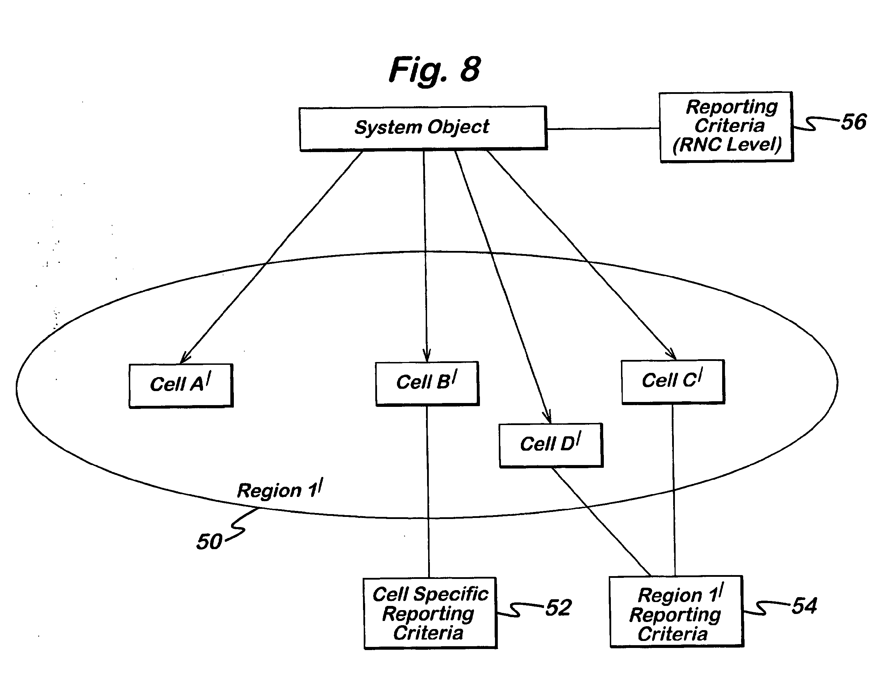

This approach can be extended to multiple levels as shown in Figure 8. As shown in Figure 8, the cells in region 1' can use cell specific reporting criteria, reporting criteria applicable across region 1' only, or a standard reporting criteria for cells controlled by the radio network controller. For example with reference to Figure 8, cell A' uses radio network controller (RNC) level reporting criteria, cell B' uses cell specific reporting criteria, and cells C' and D' use region 1' specific reporting criteria.

### Sending measurement reporting criteria as part of radio connection establishment

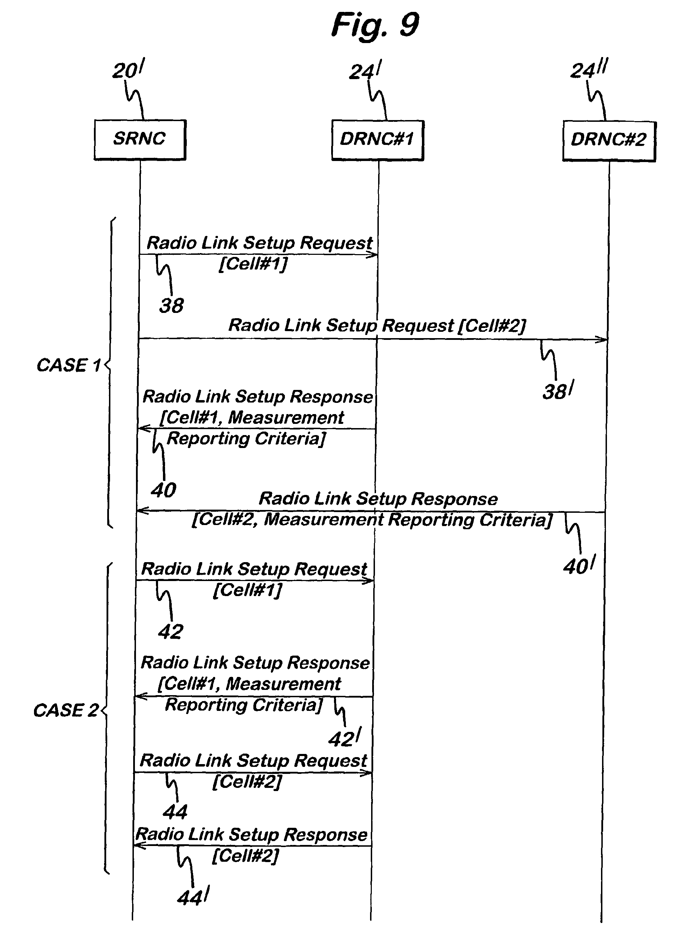

The measurement reporting criteria from cells connected to a drift radio network controller are sent whenever a radio connection is established. Figure 9 shows in example case 1 the normal scenario of setting up radio connections including sending radio connection set up requests 38, 38' to the two drift radio network controllers 24', 24" (also denoted DRNC1, DRNC2 in Figure 9) and the responses 40,40' from the two drift radio network controllers 24',24", those responses containing the measurement reporting criteria for the cells (denoted cell #1, cell #2 in Figure 9) connected to the drift radio network controllers. If no measurement reporting criteria is in the response message 40,40', the serving radio network controller (SRNC) 20' uses its own default measurement reporting criteria rather than cell-specific measurement criteria.

Example case 2 in Figure 9 shows the case when a radio connection between a mobile user terminal and a neighbouring cell is already established (using radio connection set up request 42 and response 42') under the control of the drift radio network controller (24', DRNC1 in Figure 9) and later, a second radio connection with the mobile user terminal is requested 44 to be set up under the control of the same drift radio network controller (24', DRNC 1) and with the same measurement reporting criteria as the first radio connection. In this case, the second radio link setup response 44' from the drift radio network controller (24', DRNC1) does not include the measurement reporting criteria.

### Explicit Message requesting reporting criteria

In an alternative embodiment, rather than getting the measurement reporting criteria in reply to a radio link setup request, (i.e instead of having the drift radio network controller respond with reporting criteria whenever a radio connection in being set up under the control of the drift radio network controller), the serving RNC requests the measurement reporting criteria from the drift radio network controller (DRNC) using an explicit message whenever it needs to.

For example, serving radio network controller can request the measurement reporting criteria for the strongest cell. In other words, the serving radio network controller requests the reporting criteria from the drift radio network controller only if the cell (to which the radio connection is to be set up) is the cell with least signal attenuation to and from the mobile user terminal (i.e. strongest cell) within the set of cells (the "active set")in radio connection with the mobile user terminal.

This mechanism is particular suitable for inter-radio access technology and inter-frequency handovers.

## Claims

1. A method of providing to a mobile user terminal (16) a set of measurement reporting criteria to be applied by the mobile user terminal in respect of a predetermined cell (14) of a radio telecommunications network, the network comprising a plurality of cells (14) and a controller (10,20), the method comprising the controller selecting the criteria from stored criteria, **characterised by** the controller selecting from stored sets of criteria one of the stored sets of criteria for use, one stored set of criteria being a default set (34,34',34") for cells under the control of the controller, the default set being applicable to some or all the cells controlled by the controller, and another of the stored sets of criteria being a cell-specific set (36,36',36") of criteria for a particular cell, the cell-specific set taking precedence over the default set for the particular cell.

2. A method according to claim 1, in which the network is a Universal Mobile Telecommunications System (UMTS) network, the controller (10,20) being a Radio Network Controller (RNC) controlling a plurality of base stations (12) each of which has at least one associated cell (14).

3. A method according to claim 1 or claim 2, in which reporting criteria are obtained by, within the controller (10,20), a system object (26') being directed to a cell object (28',30',32'), each cell object having a pointer to the stored set of reporting criteria for that cell, at least two cell objects (28',32') pointing to the same set of reporting criteria (34') kept as the default set.

4. A method according to claim 1 or claim 2, in which reporting criteria are obtained by, within the controller (10,20), a system object (26") being directed to the default set (34'') of reporting criteria upon determination that the cell object for the cell has no pointer to another stored set of reporting criteria (36").

5. A method according to any preceding claim, in which the stored sets of criteria further comprise a set of criteria applicable to a subset (A',B',C') of the cells controlled by the controller, the subset comprising at least two cells.

6. A method according to any preceding claim, in which the network comprises a further controller (24) controlling further cells, the further controller providing to the controller (20) the set of reporting criteria applicable to one of the further cells in response to a request from the controller (20).

7. A method according to claim 6, in which the request is a call set up request (38,38',42').

8. A radio telecommunications controller (10,20) operative to provide for a mobile user terminal in respect of a predetermined cell of a telecommunications network a set of measurement reporting criteria to be applied for that cell, the controller (10,20) comprising storage means operative to store measurement reporting criteria, **characterised in that** the storage means is operative to store sets of measurement reporting criteria one set of stored set of criteria being a default set (34,34',34") for cells under the control of the controller, the default set being applicable to some or all the cells controlled by the controller, and another set of the stored sets of criteria being a cell-specific set (36,36'36") of criteria, and selection means operative to select from the stored sets of criteria, one of the stored sets of criteria for application to a particular cell, the cell-specific set taking precedence over the default set for the particular cell.

9. A radio telecommunications network comprising a plurality of cells (14) and a controller (10,20) according to claim 8

## Patentansprüche

1. Verfahren zum Bereitstellen einer Gruppe Messberichtskriterien für ein mobiles Benutzer-Endgerät (16), die von dem mobilen Benutzer-Endgerät (16) im Zusammenhang mit einer vorgegebenen Zelle (14) eines Funkkommunikationsnetzes angewendet werden, wobei das Netz mehrere Zellen (14) und eine Steuerung (10, 20) aufweist, wobei das Verfahren beinhaltet, dass die Steuerung die Kriterien aus gespeicherten Kriterien auswählt, **dadurch gekennzeichnet, dass** die Steuerung aus gespeicherten Gruppen von Kriterien eine der gespeicherten Gruppen von Kriterien zur Verwendung auswählt, wobei eine gespeicherte Gruppe von Kriterien eine als Standard vorgegebene Gruppe (34, 34', 34") für Zellen ist, die der Kontrolle durch die Steuerung unterstehen, wobei die als Standard vorgegebene Gruppe für einige oder alle der Zellen, die durch die Steuerung gesteuert werden, gilt, und wobei eine andere der gespeicherten Gruppen von Kriterien eine zellenspezifische Gruppe (36, 36', 36") von Kriterien für eine bestimmte Zelle ist, wobei die zellenspezifische Gruppe Vorrang vor der als Standard vorgegebenen Gruppe für die bestimmte Zelle hat.

2. Verfahren nach Anspruch 1, wobei das Netz ein UMTS-Netz (Universal Mobile Telecommunications System) ist und die Steuerung (10, 20) eine Funknetzsteuerung (Radio Network Controller - RNC) ist, die mehrere Basisstationen (12) steuert, von denen jede wenigstens eine zugehörige Zelle (14) hat.

3. Verfahren nach Anspruch 1 oder Anspruch 2, wobei Berichtskriterien innerhalb der Steuerung (10, 20) durch ein Systemobjekt (26') erhalten werden, das auf ein Zellenobjekt (28', 30', 32') gerichtet ist, wobei jedes Zellenobjekt einen Zeiger zu der gespeicherten Gruppe von Berichtskriterien für diese Zelle aufweist, wobei wenigstens zwei Zellenobjekte (28', 32') zu derselben Gruppe von Berichtskriterien (34') zeigen, die als die als Standard vorgegebene Gruppe geführt wird.

4. Verfahren nach Anspruch 1 oder Anspruch 2, wobei Berichtskriterien innerhalb der Steuerung (10, 20) durch ein Systemobjekt (26") erhalten werden, das auf die als Standard vorgegebene Gruppe (34") von Berichtskriterien gerichtet ist, wenn festgestellt wird, dass das Zellenobjekt für die Zelle keinen Zeiger zu einer anderen gespeicherten Gruppe von Berichtskriterien (36") aufweist.

5. Verfahren nach einem der vorangehenden Ansprüche, wobei die gespeicherten Gruppen von Kriterien des Weiteren eine Gruppe von Kriterien aufweisen, die für eine Untergruppe (A', B', C') der Zellen gilt, die durch die Steuerung gesteuert werden, wobei die Untergruppe wenigstens zwei Zellen aufweist.

6. Verfahren nach einem der vorangehenden Ansprüche, wobei das Netz eine weitere Steuerung (24) aufweist, die weitere Zellen steuert, wobei die weitere Steuerung in Reaktion auf eine Anforderung von der Steuerung (20) die Gruppe von Berichtskriterien, die für eine der weiteren Zellen gilt, an die Steuerung (20) übermittelt.

7. Verfahren nach Anspruch 6, wobei die Anforderung eine Verbindungsaufbauanforderung (38, 38', 42') ist.

8. Funktelekommunikationssteuerung (10, 20), die dafür konfiguriert ist, für ein mobiles Benutzer-Endgerät im Zusammenhang mit einer vorgegebenen Zelle eines Funkkommunikationsnetzes eine Gruppe Messberichtskriterien bereitzustellen, die auf diese Zelle angewendet werden sollen, wobei die Steuerung (10, 20) ein Speichermittel aufweist, das dazu dient, Messberichtskriterien zu speichern, **dadurch gekennzeichnet, dass** das Speichermittel dafür konfiguriert ist, Gruppen von Messberichtskriterien zu speichern, wobei eine Gruppe aus den gespeicherten Gruppen von Kriterien eine als Standard vorgegebene Gruppe (34, 34', 34") für Zellen ist, die der Kontrolle durch die Steuerung unterstehen, wobei die als Standard vorgegebene Gruppe für einige oder alle der Zellen, die durch die Steuerung gesteuert werden, gilt, und wobei eine andere Gruppe der gespeicherten Gruppen von Kriterien eine zellenspezifische Gruppe (36, 36', 36") von Kriterien ist, und ein Auswahlmittel aufweist, das dafür konfiguriert ist, aus den gespeicherten Gruppen von Kriterien eine der gespeicherten Gruppen von Kriterien zur Anwendung auf eine bestimmte Gruppe auszuwählen, wobei die zellenspezifische Gruppe Vorrang vor der als Standard vorgegebenen Gruppe für die bestimmte Zelle hat.

9. Funktelekommunikationsnetz, das mehrere Zellen (14) und eine Steuerung (10, 20) nach Anspruch 8 aufweist.

## Revendications

1. Procédé de fourniture à un terminal d'utilisateur mobile (16) d'un ensemble de critères de relevés de mesures destiné à être appliqué par le terminal d'utilisateur mobile relativement à une cellule prédéterminée (14) d'un réseau de télécommunications radio, le réseau comprenant une pluralité de cellules (14) et un contrôleur (10, 20), le procédé comprenant la sélection par le contrôleur des critères parmi des critères mémorisées, **caractérisé par** la sélection par le contrôleur parmi des ensembles mémorisés de critères de l'un des ensembles mémorisés de critères en vue de son utilisation, un ensemble mémorisé de critères étant un ensemble par défaut (34, 34', 34") pour des cellules placées sous la commande du contrôleur, l'ensemble par défaut étant applicable à certaines ou à toutes les cellules commandées par le contrôleur, et un autre des ensembles mémorisés de critères étant un ensemble de critères (36, 36', 36") spécifique à la cellule pour une cellule particulière, l'ensemble spécifique à la cellule ayant priorité sur l'ensemble par défaut pour la cellule particulière.

2. Procédé selon la revendication 1, dans lequel le réseau est un réseau de Système de Télécommunications Mobiles Universel (UMTS), le contrôleur (10, 20) étant un Contrôleur de Réseau Radio (RNC) qui commande une pluralité de stations de base (12) qui ont chacune au moins une cellule associée (14).

3. Procédé selon la revendication 1 ou la revendication 2, dans lequel les critères de relevés sont obtenus, au sein du contrôleur (10, 20), par un objet système (26') dirigé vers un objet cellule (28', 30', 32'), chaque objet cellule ayant un pointeur vers l'ensemble mémorisé de critères de relevés pour cette cellule, au moins deux objets cellule (28', 32') pointant vers le même ensemble de critères de relevés (34') maintenu comme ensemble par défaut.

4. Procédé selon la revendication 1 ou la revendication 2, dans lequel les critères de relevés sont obtenus, au sein du contrôleur (10, 20), par un objet système (26") dirigé vers l'ensemble par défaut (34") de critères de relevés lorsqu'il est déterminé que l'objet cellule pour la cellule n'a pas de pointeur vers un autre ensemble mémorisé de critères de relevés (36").

5. Procédé selon l'une quelconque des revendications précédentes, dans lequel les ensembles mémorisés de critères comprennent en outre un ensemble de critères applicable à un sous-ensemble (A', B', C') des cellules commandées par le contrôleur, le sous-ensemble comprenant au moins deux cellules.

6. Procédé selon l'une quelconque des revendications précédentes, dans lequel le réseau comprend un autre contrôleur (24) qui commande d'autres cellules, l'autre contrôleur fournissant au contrôleur (20) l'ensemble de critères de relevés applicable à l'une des autres cellules en réponse à une requête du contrôleur (20).

7. Procédé selon la revendication 6, dans lequel la requête est une requête d'établissement d'appel (38, 38', 42').

8. Contrôleur de télécommunications radio (10, 20) fonctionnant pour fournir à un terminal d'utilisateur mobile relativement à une cellule prédéterminée d'un réseau de télécommunications un ensemble de critères de relevés de mesures destiné à être appliqué pour cette cellule, le contrôleur (10, 20) comprenant un moyen de mémorisation servant à mémoriser des critères de relevés de mesures, **caractérisé en ce que** le moyen de mémorisation sert à mémoriser des ensembles de critères de relevés de mesures un ensemble mémorisé de critères de mesures étant un ensemble par défaut (34, 34', 34") pour des cellules placées sous la commande du contrôleur, l'ensemble par défaut étant applicable à certaines ou à toutes les cellules commandées par le contrôleur, et un autre ensemble des ensembles mémorisés de critères étant un ensemble de critères (36, 36', 36") spécifique à la cellule, et un moyen de sélection servant à sélectionner parmi les ensembles mémorisés de critères, l'un des ensembles mémorisés de critères en vue de son application à une cellule particulière, l'ensemble spécifique à la cellule ayant priorité sur l'ensemble par défaut pour la cellule particulière.

9. Réseau de télécommunications radio comprenant une pluralité de cellules (14) et un contrôleur (10, 20) selon la revendication 8.
